## Europäisches Patentamt
## European Patent Office
## Office européen des brevets

(19)

(11) Veröffentlichungsnummer: **0 312 758**
**B1**

(12) **EUROPÄISCHE PATENTSCHRIFT**

(45) Veröffentlichungstag der Patentschrift: **23.01.91**

(51) Int. Cl.⁵: **F 16 L 33/22**

(21) Anmeldenummer: **88114775.5**

(22) Anmeldetag: **09.09.88**

(54) **Anordnung zur Befestigung von Schläuchen an Schlauchstutzen.**

(30) Priorität: **10.09.87 DE 3730427**

(43) Veröffentlichungstag der Anmeldung:
**26.04.89 Patentblatt 89/17**

(45) Bekanntmachung des Hinweises auf die
Patenterteilung:
**23.01.91 Patentblatt 91/04**

(84) Benannte Vertragsstaaten:
**BE ES FR GB IT SE**

(56) Entgegenhaltungen:
**EP-A-0 237 797**
**FR-A-2 147 483**

(73) Patentinhaber: **METZELER Gesellschaft mit
beschränkter Haftung
Gneisenaustrasse 15
D-8000 München 50 (DE)**

(72) Erfinder: **Gorski, Ekkehard
Brennerstrasse 5
D-8012 Ottobrunn (DE)**

(74) Vertreter: **Michelis, Theodor, Dipl.-Ing.
Gneisenaustrasse 15
D-8000 München 50 (DE)**

Courier Press, Leamington Spa, England.

**Beschreibung**

Die Erfindung bezieht sich auf eine Anordnung der im Oberbegriff des ersten Anspruchs angegebenen Art.

Üblicherweise werden die Schläuche auf den Schlauchstutzen durch Schlauchschellen fixiert, indem letztere über eine Schraub- oder Quetschverbindung vorgespannt sind.

Nachteilig bei derartigen Verbindungen ist es, daß nicht immer gewährleistet ist, daß die Schlauchschelle einen gleichmäßig hohen Anpreßdruck über den gesamten Schlauchumfang aufweist, so daß während der Einsatzzeit Undichtigkeiten an den Verbindungsstellen auftreten können. Auch ist das Anbringen der Schlauchschelle und ihr anschließendes Vorspannen arbeitsaufwendig, da es in der Regel von Hand durchgeführt wird.

Aufgabe der vorliegenden Erfindung ist es, eine Anordnung der eingangs genannten Art dahingehend zu verbessern, daß deren Zuverlässigkeit gegen Undichtigkeit erhöht wird.

Diese Aufgabe wird erfindungsgemäß durch die kennzeichnenden Merkmale des Anspruchs 1 gelöst. Diese Lösung basiert auf der Erkenntnis, daß anstelle der Schlauchschelle, die den Schlauch auf den Stutzen hält aufgrund ihrer Vorspannung, ein Ring vorgesehen wird und daß die Haltekräfte durch die verfestigten plastischen Massen aufgebracht werden, in die der Ring eingebettet ist. Dadurch wird ein intensiver und gleichmäßiger Anpreßdruck auf den gesamten Schlauchumfang, soweit er auf den Schlauchstutzen aufgeschoben ist, erzielt. Der Ring dient also gleichsam als Armierung für die plastische Masse. Dadurch wird erreicht, daß keine Aufweitung der Schlauchverbindung durch hohe Temperaturen und/oder hohen Druck eintreten kann, da der Ring jeglicher Aufweitung entgegenwirkt. Als verfestigbare plastische Massen kommen Kunststoffe oder Gummiverbindungen in Betracht. Diese werden üblicherweise durch Umspritzen der in einer entsprechenden Form eingelegten Befestigungsanordnung mit evtl. anschließendem Aushärten (Ausvulkanisieren) erzielt. Durch das Einbetten des Ringes in diese Masse wird zudem ein Korrosionsschutz für ihn erzielt. Daneben wird durch die Umhüllung zugleich eine optisch glatte Verbindungsstelle geschaffen, die gleichzeitig verhindert, daß von außen Schmutz und Feuchtigkeit an die Schlauchstirnseite gelangt. Diese kann bei gewebeverstärkten Schläuchen zu einem langsamen Verrotten der Gewebeeinlage und damit zu einem Festigkeitsverlust des Schlauches führen.

Die notwendige Lagefixierung für den Ring während des Umspritzungsvorganges kann durch eine entsprechend ausgebildete Spritzform erzielt werden. Diese Form bestimmt die Oberfläche und Stärke der verfestigten plastischen Masse. Darüber hinaus ist es möglich, die Lagefixierung durch einzelne örtlich begrenzte Verquetschungen auf dem Umfang des Ringes zu erzielen, wie Anspruch 2 vorschlägt.

Anspruch 3 beschreibt ein bevorzugtes Ringmaterial.

Die Weiterbildung nach Anspruch 4 hat den Vorteil, daß die plastischen Massen leichter unter den Ring gelangen können, so daß sich dort keine Hohlräume/Lunker bilden können.

Bei mit Außenprofilierungen versehenen Schlauchstutzen beschreibt Anspruch 5 eine bevorzugte Anordnung. Damit wird sichergestellt, daß auf einer ausreichenden axialen Länge ein gleichmäßiger Anpreßdruck des Schlauches auf den Stutzen erzielt wird.

Im folgenden wird die Erfindung anhand eines bevorzugten Ausführungsbeispieles näher beschrieben. Es stellen dar:

Fig. 1 einen Querschnitt durch eine Formschlauchverzweigung vor dem Aufbringen der umspritzten Masse;

Fig. 2 einen Querschnitt durch eine fertige Schlauchverbindung.

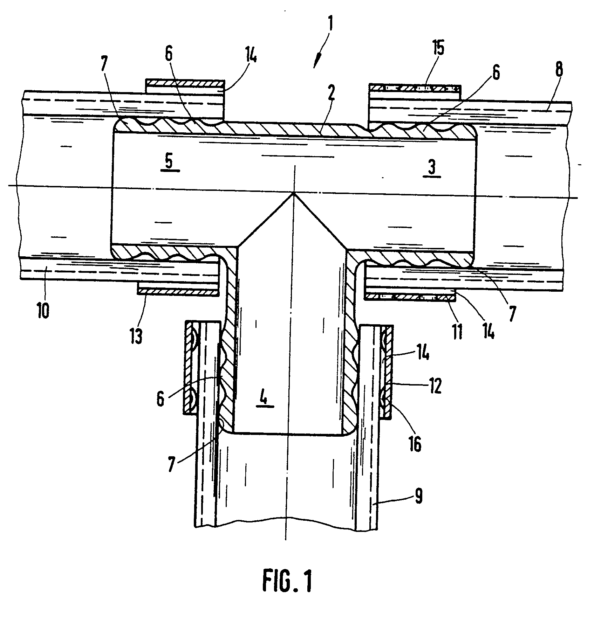

Die in Fig. 1 gezeigte Schlauchverbindung 1 besteht aus einem T-förmigen Schlauchstutzen 2 mit den drei Anschlußstutzen 3, 4 und 5. Der Außenumfang der Anschlußstutzen ist in an sich bekannter Weise mit Umfangsrillen 6 bzw. mit einem geeigneten Profil ausgeführt. Die Profile können so ausgeführt werden, daß das jeweils äußere Profil als Längsprofil 7 ausgebildet ist. Dadurch wird eine Verdrehsicherung für die aufgeschobenen Schläuche erzielt. Damit können auch Formschläuche sicher während des im folgenden beschriebenen Befestigungsverfahrens verwendet werden.

Auf jedem Schlauchstutzen ist ein Schlauch 8, 9 und 10 aufgeschoben. Der Schlauchinnendurchmesser ist so gewählt, daß er kleiner ist als der Schlauchstutzenaußendurchmesser. Dadurch wird der Schlauch beim Aufschieben aufgeweitet.

Um jedes aufgeschobene Schlauchsegment wird ein Ring 11, 12, 13 gelegt. Die Ringe sind in dem Bespiel in Fig. 1 verschieden ausgebildet, um eine bevorzugte Auswahl zu zeigen. In der Praxis wird man an jedem Schlauchstutzen einheitlich ausgebildete Ringe verwenden. Die Ringe 11 und 13 weisen einen derartigen Innendurchmesser auf, der größer ist als der Außendurchmesser des Schlauches. Dadurch verbleibt ein umlaufender Ringspalt 14. Während der Ring 13 einen geschlossenen Umfang aufweist, hat der Ring 11 auf seinem Außenumfang Durchbrüche 15, die den Ringspalt 14 mit der Umgebung verbinden.

Der Ring 12 weist ebenfalls einen Ringspalt 14 zum Schlauchumfang hin auf. In diesen Ringspalt ragen jedoch ausgehend von dem Ring 12 Nasen 16, die sich leicht in den Schlauchaußenumfang eindrücken. Diese Nasen 16 haben nur die Aufgabe, den Ring 12 während des Herstellungsprozesses der Schlauchverbindung auf dem Außenumfang des Schlauches zu halten.

Die axiale Länge aller Ringe ist so gewählt, daß sie nicht die gesamte Profilierung auf dem Schlauchstutzen umfaßt. Vielmehr muß sie so gewählt werden, daß sie zwar mehrere Rillen oder Profile überdeckt, sie sollte jedoch in jedem Fall — falls vorhanden — das vordere Ende des Schlauchstutzens bei Vorsehen eines Längsprofils 7 als Verdrehsicherung frei lassen.

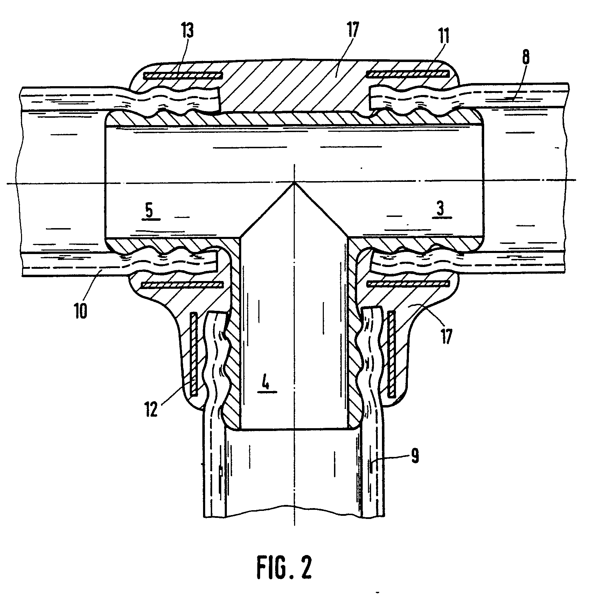

Um nun eine druckdichte und zugfeste Verbindung der einzelnen Schläuche mit dem Schlauchstutzen zu erzielen, wird die gesamte Anordnung 1 in eine Gießform gelegt. Die Gießform ist hierbei so ausgebildet, daß die Ringe 11 und 13 konzentrisch zu den Schlauchstutzen gehalten werden. Sodann wird in diese Gießform eine plastische Masse 17 wie beispielsweise Kunststoff oder Gummi eingefüllt, und zwar mit hohem Druck. Dadurch kann diese Masse auch in die Ringspalte 14 zwischen Schlauchaußenumfang und Ring eindringen und den Ring mitumschließen. Aufgrund des hohen Druckes wird der Schlauchaußenumfang verformt und der Schlauch in die Profilierung hineingedrückt. Sobald die plastische Masse ausgehärtet ist, wird die Anordnung 1 aus der Form herausgenommen. Man erhält dann eine Anordnung nach Fig. 2.

An Fig. 2 kann man auch die Innenkontur der Gießform erkennen. Aufgrund der Ringe, die gleichsam als Armierung in der plastischen Masse eingebettet sind, wird eine Schlauchverbindung erzielt, die eine wesentlich bessere Dauerdichtigkeit aufgrund des gleichmäßigen Anpreßdruckes der plastischen Masse über den gesamten Schlauchumfang aufweist. Diese Verbindung ist ähnlich preiswert herzustellen wie bisherige Schlauchverbindungen, weist jedoch die erhöhte Zuverlässigkeit auf.

Ergänzend soll noch erwähnt werden, daß in Fig. 2 bei der gezeigten Verbindung drei Ringe des gleichen Typs verwendet wurden. Die Ringe in Fig. 2 entsprechen dem Ring 13 in Fig. 1.

## Patentansprüche

1. Anordnung zum Befestigen von Schläuchen an Schlauchstutzen, bei der der Schlauch auf den Schlauchstutzen aufgeschoben und von einem Ring umgeben ist, dadurch gekennzeichnet, daß der Ring (11, 12, 13) radial zum Schlauch (8, 9, 10) beabstandet ist und daß die Befestigungsstelle zumindest im Bereich zwischen dem Schlauch (8, 9, 10) und dem Ring (11, 12, 13) mit einer verfestigten plastischen Masse (17) umhüllt ist.

2. Anordnung nach Anspruch 1, dadurch gekennzeichnet, daß der Ring (11, 12, 13) zur Lagefixierung vor der Umhüllung partielle Verquetschungen aufweist.

3. Anordnung nach Anspruch 1 oder 2, dadurch gekennzeichnet, daß der Ring (11, 12, 13) aus Metall besteht.

4. Anordnung nach einem der vorangegangenen Ansprüche, dadurch gekennzeichnet, daß der Ring (11, 12, 13) auf seinem Umfang Durchbrüche (15) aufweist.

5. Anordnung nach einem der vorangegangenen Ansprüche, wobei der Schlauchstutzen profiliert auf seinem Außenumfang ist, dadurch gekennzeichnet, daß der Ring (11, 12, 13) mindestens mehrere Profilierungen (6 bzw. 7) in axialer Richtung überdeckt.

## Revendications

1. Agencement de fixation de tuyaux souples à des embouts, dans lequel le tuyau souple est enfilé sur l'embout et est entouré d'un anneau, caractérisé en ce que l'anneau (11, 12, 13) est radialement à distance du tuyau souple (8, 9, 10) et en ce que le point de fixation est enrobé au moins dans la partie comprise entre le tuyau souple (8, 9, 10) et l'anneau (11, 12, 13) d'une masse plastique (17) solidifiée.

2. Agencement selon la revendication 1, caractérisé en ce que l'anneau (11, 12, 13) comporte, pour la fixation en position, des parties partiellement écrasées avant l'enrobage.

3. Agencement selon la revendication 1 ou 2, caractérisé en ce que l'anneau (11, 12, 13) est en métal.

4. Agencement selon l'une des revendications précédentes, caractérisé en ce que l'anneau (11, 12, 13) comporte des passages (15) à sa périphérie.

5. Agencement selon l'une des revendications précédentes, dans lequel l'embout est profilé sur sa périphérie extérieure, caractérisé en ce que l'anneau (11, 12, 13) recouvre en direction axiale au moins plusieurs profilés (6 et 7).

## Claims

1. Arrangement for fastening hoses to connection branches, wherein the hose is fitted on the connection branch and is surrounded by a ring, characterised in that the ring (11, 12, 13) is radially spaced apart from the hose (8, 9, 10) and that the fastening point is covered at least in the region between the hose (8, 9, 10) and the ring (11, 12, 13) with a solidified plastic substance (17).

2. Arrangement according to claim 1, characterised in that the ring (11, 12, 13) has partial deformations for fixing its position prior to covering.

3. Arrangement according to claim 1 or 2, characterised in that the ring (11, 12 13) is made of metal.

4. Arrangement according to one of the preceding claims, characterised in that the ring (11, 12, 13) has openings (15) in its periphery.

5. Arrangement according to one of the preceding claims, with the connection branch being profiled on its outer periphery, characterised in that the ring (11, 12, 13) overlaps at least a plurality of profiles (6 or 7) in an axial direction.

FIG. 1

FIG. 2